# EUROPEAN PATENT SPECIFICATION

(11) **EP 4 035 644 B1**
(45) Date of publication and mention of the grant of the patent: **22.11.2023**
(21) Application number: 22152893.8
(22) Date of filing: 24.01.2022
(51) Int. Cl.: A61H 39/00, G09B 9/00

(54) **ACUPUNCTURE OR OPTICAL STIMULATION SYSTEM**
AKUPUNKTUR- ODER OPTISCHES STIMULATIONSSYSTEM
SYSTÈME DE STIMULATION ACUPUNCTURE OU OPTIQUE

(30) Priority: 27.01.2021 IT 202100001643
(43) Date of publication of application: 03.08.2022
(73) Proprietor: Praxe Srl, 60121 Ancona (IT)
(72) Inventor: FRANCO, Antonio, 60131 ANCONA (IT); SCALISE, Lorenzo, 60131 ANCONA (IT)
(74) Representative: Cutropia, Gianluigi

(56) References cited:
- EP-A2- 2 559 413
- WO-A1-2017/151963
- CN-A- 111 317 665
- CN-A- 112 185 185
- US-A1- 2020 126 297

## Description

The present invention relates to an acupuncture or optical stimulation system.

As it is known, the practitioners who are qualified to perform acupuncture on patients must know and memorize some needle application sequences and associate them with the patient's pathology. As in any health profession, the human factor is absolutely essential, meaning the diagnosis for each patient and the consequent specific therapy. However, some pathologies or affections can be treated with a standard therapy, whereas others may need a standard basis on which the modifications decided by the health professional are to be applied. In addition, acupuncture points are sought by the practitioner through a manual technique, calculating the distance between two landmarks, or the distance from a bone portion, thus resulting in a unique application for each patient. Therefore, many practitioners prefer to abandon the acupuncture technique, or to always apply the standard sequences that they remember.

In addition, techniques that are similar to acupuncture can be applied using optical systems (such as mono/multi-wavelength lasers or LED sources) because the work done by such devices is similar to that one done by the needles used for acupuncture, i.e. they can stimulate certain predefined points.

Other solutions related to acupuncture systems have been patented in order to overcome the limitations of the prior art.

US2020126297A1 discloses a system and a method to generate acupuncture points on a three-dimensional mesh that is representative of the human body. A processor generates a first two-dimensional image of a human subject which comprises at least a predefined portion of the human subject, and processes said first two-dimensional image using a trained human body recovery model to obtain a plurality of parameters representing the three-dimensional human body mesh with corresponding acupuncture points. The trained human body recovery model includes an iterative three-dimensional regression module that is supervised by a discriminator and that minimizes a combined loss below a preset threshold. Such a loss comprises an error that provides an estimation of whether the obtained three-dimensional human body mesh with corresponding acupuncture points corresponds to the real human shape, body pose, and acupuncture points.

KR102110442B1 discloses a method for displaying meridians and acupuncture points and, more specifically, a method for displaying the 3D modeling of the human body. The method for displaying meridians and acupuncture points comprises the following steps: executing a dedicated screen for displaying meridians and acupuncture points in the 3D modeling of the human body, selecting of some parts of the body by means of the screen, displaying of the positions of the meridians or acupuncture points included in the parts of the human body selected on a human body 3D modeling screen. The method also comprises selecting at least one of the positions of the meridians and of the acupuncture points, and outputting information related to the selected location of the meridians or acupuncture points. Therefore, an operator with basic knowledge on acupuncture points and on oriental medicine is able to visually identify the positions of the meridians of the acupuncture points, for therapeutical uses, just like an expert operator.

EP3524222A4 discloses a three-dimensional acupoint mapping method comprising the step of making use of a three-dimensional standard image inclusive of a three-dimensional image for an internal tissue of the human body to produce a standard template of the internal tissue for determining a standard location of an acupoint. A following step consists in determining the standard location of the acupoint where a location of the internal tissue is considered on the three-dimensional standard image on the basis of the standard template of the internal tissue to map the determined standard location onto the three-dimensional standard image. In the second step, where the standard location of the acupoint is determined on the basis of the model of the internal tissue, the latter is represented by at least one of a blood vessel, a nerve, a muscle, the skeleton or an organ.

Nevertheless, the systems of the prior art are limited by the fact that they are not able to perfectly map the various parts of the human body with the known acupuncture sequences. Moreover, such systems do not provide the possibility of stimulating said points with other methods, such as optical methods.

The purpose of the present invention is to overcome the limitations of the systems of the prior art by providing an acupuncture system capable of perfectly mapping the various parts of the human body with the known acupuncture sequences.

According to the present invention, an acupuncture system as defined in claim 1 is realized.

For a better understanding of the present invention, a preferred embodiment is now described, for merely illustrative, non-limiting purpose, with reference to the appended drawings, wherein:
Fig. 1 is a schematic side view of an acupuncture or optical stimulation system according to the invention;

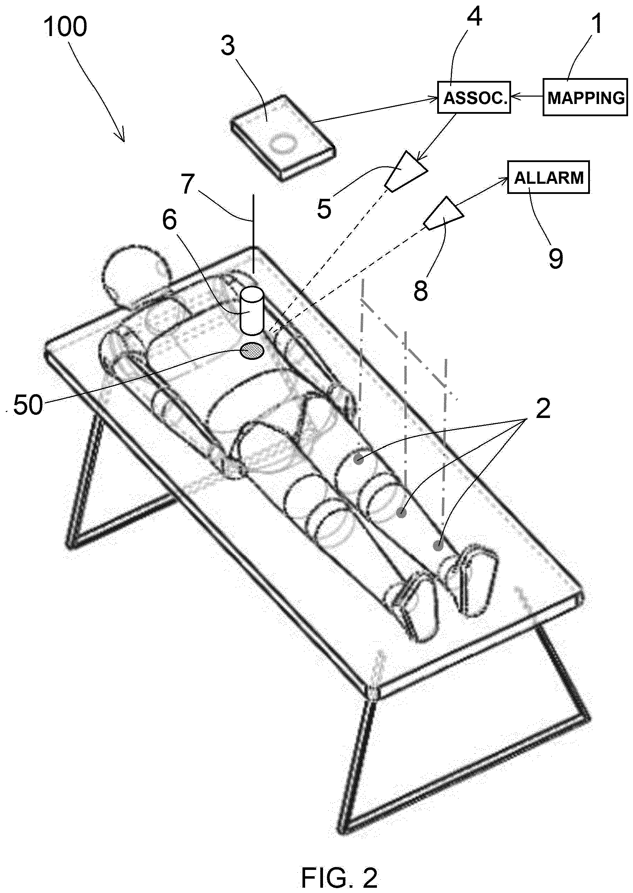

Fig. 2 is a perspective view of the acupuncture or optical stimulation system according to the invention;
Fig. 3 is a schematic view illustrating a system for the projection of a mark and for the alignment of an alignment support of the acupuncture or optical stimulation system according to the invention;
Fig. 3A is a view illustrating the case in which the alignment support is not aligned with the mark;
Fig. 3B is a view illustrating the case in which the alignment support is aligned with the mark; and
Fig. 4 is a block diagram of the acupuncture or optical stimulation system according to the invention.

In the following description, reference is made to an acupuncture system, it being understood that the same system with the same components can be applied to optical stimulation methods.

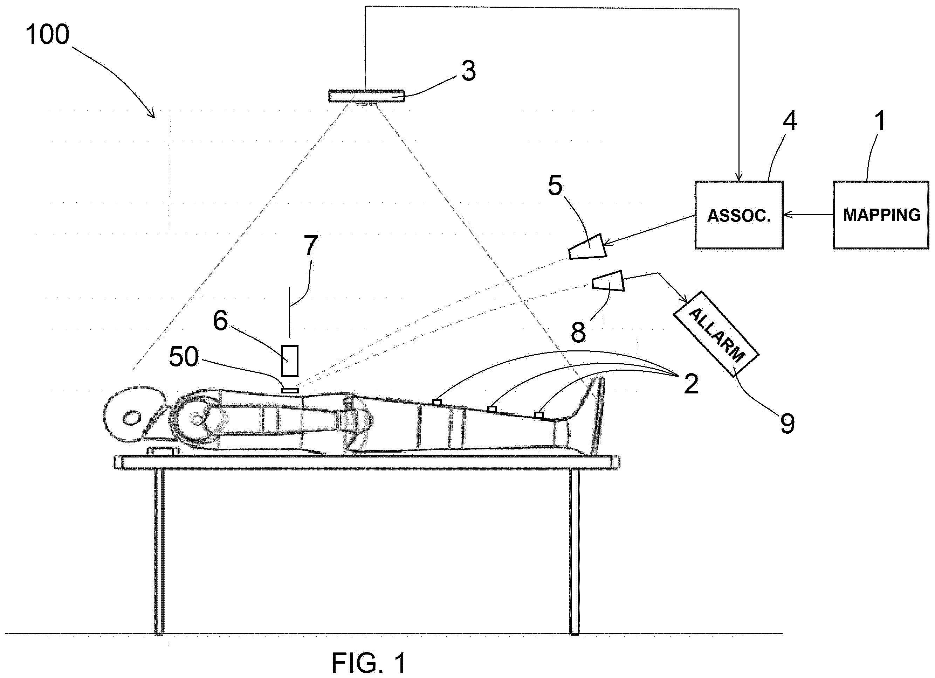

With reference to Fig. 1, an acupuncture or optical stimulation system (100) is shown.

The system (100) comprises:
- a mapping module (1) wherein acupuncture application sequences are stored for pathologies to be treated;
- landmarks (2) suitable for being applied to a patient's body to identify characteristic anatomical points of the patient;
- a 3D scanning module (3) suitable for performing a 3D scan (S1) of the patient's body;
- a data association module (4) configured to associate the 3D scan (S1) made by the 3D scanning module (3) with an acupuncture application sequence (S2) stored in the mapping module (1), based on a pathology of the patient, so as to identify a certain acupuncture application sequence (S3) applied to the 3D scan (S1);
- a projector (5) connected to the data association module (4) and configured to receive said acupuncture application sequence (S3) applied to the 3D scan (S1) and accordingly project a mark (50) onto the patient's body in a temporal sequence and in positions of the points to be treated;
- an alignment support (6) suitable for being placed on said mark (50) to align an application of a needle (7) or of an optical stimulation device on said mark (50);
- an optical detection module (8) suitable for detecting whether the alignment support (6) is correctly positioned on said mark (50); and
- an alarm device (9) operatively connected to said optical detection module (8) and configured for informing the operator about a correct positioning of the alignment support (6) on the mark (50).

The mapping module (1) is a database wherein a plurality of acupuncture application sequences is stored, based on the pathology.

The landmarks (2) are markers having a different color with respect to the color of the patient's body, in order to be identified by the scanning module (3). The landmarks (2) can be of passive or electronic type. The landmarks are applied in certain positions on the patient's body.

The scanning module (3) is a 3D scanner that is configured in such a way to scan the patient's body and locate the landmarks (2). As a result of the scanning, the scanning module (3) processes information regarding the user's body characteristics, e.g., trunk width, height, foot size, arm length, etc.

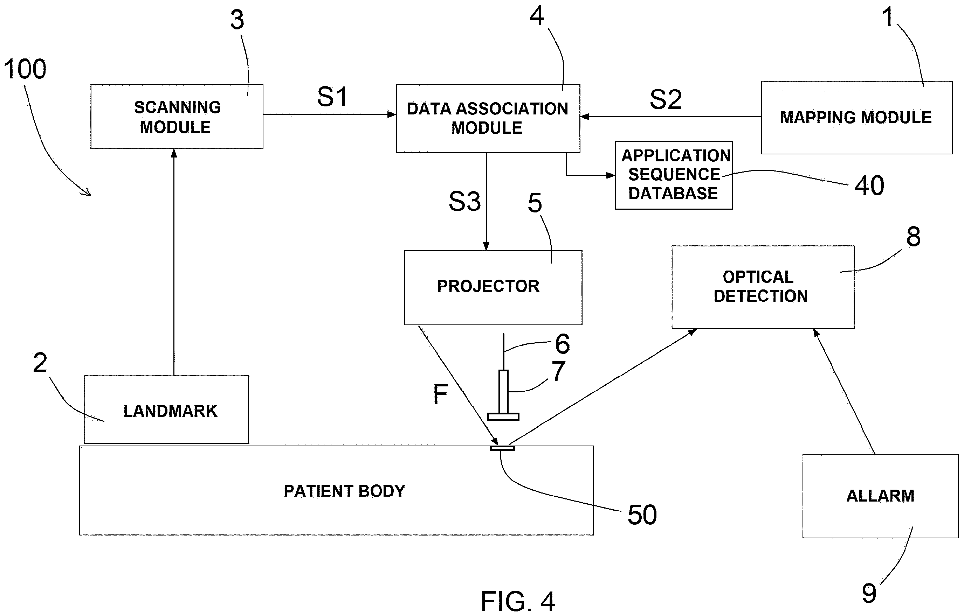

With reference to Fig. 4, the association module (4) is a software that associates a scan (S1) performed by the scanning module (3) with an application sequence (3) stored in the mapping module (1) that has been selected by the operator based on the patient's pathology. Naturally, the operator is free to modify the application sequence.

Moreover, the data association module (4) creates a database (40) of needle application sequences, according to the pathologies, which are applied to a 3D image of a human body obtained from the scanning module (3). The database (40) is accessible via a PC or a smart device.

In each case, the data association module (4) sends a certain application sequence (S3) relative to the 3D scan (S1) of the user's body to the projector (5). Then, the projector (5) transmits a beam of light (F) that hits the patient's body, creating a mark (50) that is clearly visible to the operator, precisely in the point where the needle or the optical stimulation device is to be applied. The projector (5) can be a laser project or a LED projector.

The mark (50) exactly identifies the point where the needle is to be applied. The position of the mark changes temporally according to the application sequence.

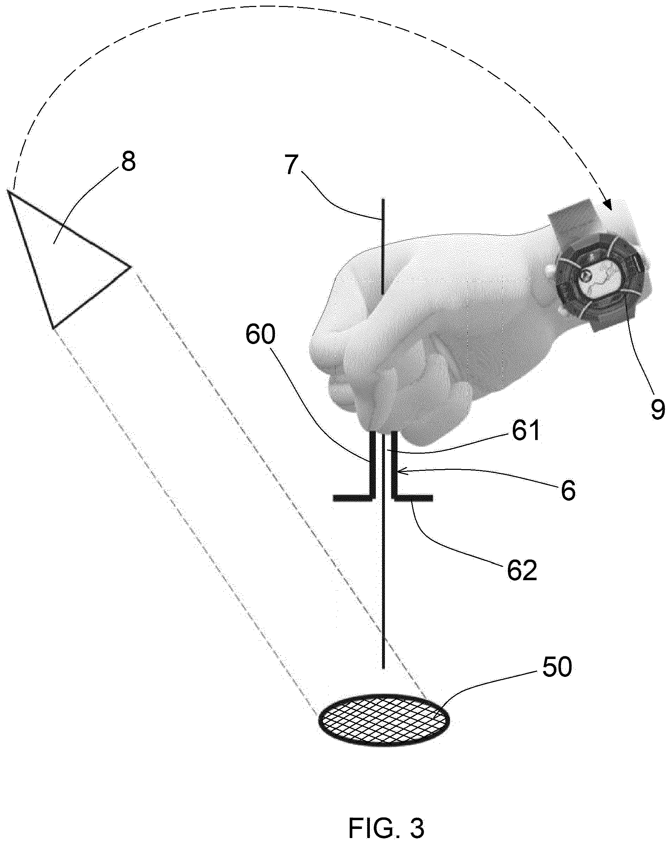

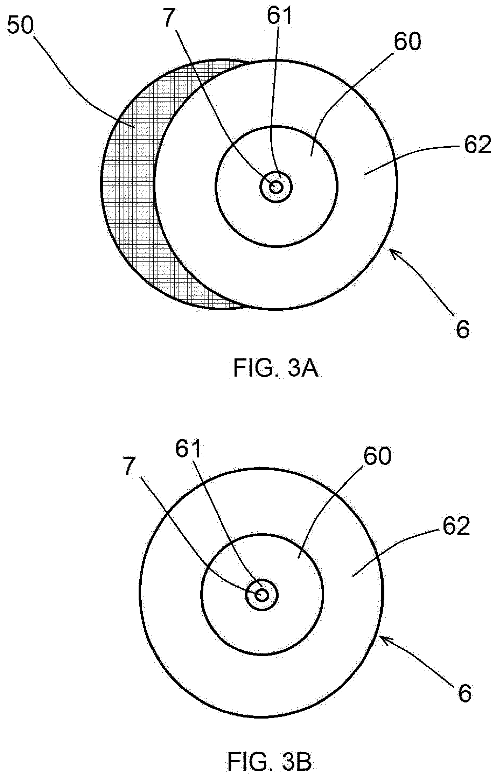

With reference to Fig. 3, the alignment support (6) comprises a body (60) and a base (62) suitable for being applied on the mark (50). The body (60) and the base (62) have an axial hole (61) wherein a needle (7) or an optical stimulation device can be inserted.

The mark (50) has the same perimeter contour as the base (62) of the alignment support. For example, the mark (50) and the base (62) of the alignment support have a circular shape with the same diameter.

In view of the above, if the alignment support (6) is not positioned correctly on the mark (50), as shown in Fig. 3A, a part of the mark (50) remains uncovered with respect to the base (62) of the support.

On the contrary, if the support (6) is positioned correctly on the mark, as shown in Fig. 3B, the base (62) of the support completely covers the mark and no part of the mark is visible.

The optical detection module (8) comprises a camera suitable for capturing the alignment support (6) positioned on the mark (50). The optical detection module (8) further comprises an image detection software suitable for detecting an image of a portion of the mark (50). As long as the software of the optical detection module (8) detects a portion of the mark (50), it means that the alignment support (6) is not correctly positioned on the mark.

When the software of the optical detention module (8) no longer detects a portion of the mark (50), it means that the alignment support (6) is correctly positioned on the mark (50) and therefore the optical detention module (8) sends a command signal to the alarm device (9) to inform the operator that the alignment support (6) is correctly positioned on the mark. At this point, the operator can insert the needle (7) or the optical stimulation device in the alignment support (6), having the certainty that the stimulation will be performed in a correct point of the patient's body.

The alarm device (9) may be of optical, acoustic or vibration type.

With reference to Fig. 3, advantageously, the alarm device (9) may be a bracelet worn by the operator, in the vicinity of the hand used to hold the needle. In such a case, the alarm device (9) is connected to the optical detection module (8) in wireless mode, e.g., via the Bluetooth protocol and the like.

Advantageously, by means of the mapping module (1), the system (100) allows to map all the known acupuncture application sequences based on the pathologies and to associate them to a 3D image of the human body of a user by means of the association module (4), thus creating a list of sequences and pathologies that can be used via a software on a PC or a smart device.

During use, the system (100) uses the 3D scanning module (3) to obtain a 3D scan of the patient's body to be associated with the database (40). In such a way, after the presentation of the medical history, namely during the first session, each patient is subjected to 3D scanning.

The 3D scanning module (3) outputs a file of the scan related to the user that is associated to the database (40).

The projector (5) reproduces a mark (50) on the user's body based on the acupuncture points to be applied on the user's body, according to the body data acquired by the scanning module (3) and according to the information on the pathology to be treated entered by the practitioner. In this way, the practitioner can apply the needles perfectly and consistently with the body characteristics of the patient in question. The location or the application sequence can be modified by the operator based on his/her knowledge. Therefore the operator is guided by the system (100) during the treatment, by means of an optical indication consisting in the mark (50) projected by the projector (5) on the surface of the user's body, and by means of the alarm device (9) which assists the operator in identifying a correct sequence and a correct position of the needles.

Thus, the acupuncture or optical stimulation system according to the invention allows to apply needles or optical stimulation devices perfectly and consistently with the characteristics of the patient's body. The alignment support (6) allows for using needles or optical stimulation devices.

Another advantage of the acupuncture or optical stimulation system according to the invention is represented by its cost-effectiveness.

Finally, the acupuncture or optical stimulation system according to the invention is very simple.

It is clear that modifications and variations may be made to the acupuncture or optical stimulation system according to the invention as described and illustrated herein, without thereby departing from the scope of protection of the present invention as defined in the appended claims.

## Claims

1. Acupuncture or optical stimulation system (100) comprising:
- a mapping module (1) wherein acupuncture application sequences are stored for the pathologies to be treated;
- landmarks (2) suitable for being applied to a patient's body to identify characteristic anatomical points of the patient;
- a 3D scanning module (3) suitable for performing a 3D scan (S1) of the patient's body;
- a data association module (4) configured to associate the 3D scan (S1) made by the 3D scanning module (3) with an acupuncture application sequence (S2) stored in the mapping module (1), based on a pathology of the patient, so as to identify a certain acupuncture application sequence (S3) applied to the 3D scan (S1);
- a projector (5) connected to the data association module (4) and configured to receive said acupuncture application sequence (S3) applied to the 3D scan (S1) and accordingly project a mark (50) on the patient's body in a temporal sequence and in positions of points of the body to be treated;
**characterised in that**, the system further comprises:
- an alignment support (6) suitable for being placed on said mark (50) in order to align an application of a needle (7) or of an optical stimulation device on said mark (50);
- an optical detection module (8) for detecting whether the alignment support (6) is correctly positioned on said mark (50); and
- an alarm device (9) operatively connected to said optical detection module (8) and configured to inform the operator about a correct positioning of the alignment support (6) on the mark (50).

2. The system (100) according to claim 1, wherein the alignment support (6) comprises a body (60) and a base (62) suitable for being applied to the mark (50) projected by the projector, and wherein the body (60) and the base (62) have an axial hole (61) for the insertion of a needle (7) or an optical stimulation device.

3. The system (100) according to claim 2, wherein the mark (50) has the same perimeter contour as the base (62) of the alignment support.

4. The system (100) according to claim 3, wherein the mark (50) and the base (62) of the alignment support have a circular shape with the same diameter.

5. The system (100) according to any one of the preceding claims, wherein said optical detection module (8) comprises a camera suitable for capturing the alignment support (6) positioned on the mark (50).

6. The system (100) according to any one of the preceding claims, wherein said optical detection module (8) comprises an image detection software suitable for detecting an image of a portion of the mark (50) that is not covered by the alignment support (6).

7. The system (100) according to any one of the preceding claims, wherein said alarm device (9) is of optical, acoustic and/or vibration type.

8. The system (100) according to any one of the preceding claims, wherein said alarm device (9) is a bracelet worn by the operator

9. The system (100) according to any one of the preceding claims, wherein said alarm device (9) is connected to said optical detection module (8) in wireless mode.

10. The system (100) according to any one of the preceding claims, comprising a database (40) of needle application sequences, according to a pathology, applied to a 3D image of a human body scanned by said 3D scanning module (3), wherein said database (40) is created by said data association means (4) and wherein said database (4) is accessible via a PC or a smart device

## Patentansprüche

1. Akupunktur- oder optisches Stimulationssystem (100), umfassend:
- ein Kartierungsmodul (1), in dem Akupunkturanwendungssequenzen für die behandelnden Krankheiten gespeichert sind;
- Landmarken (2), die geeignet sind, auf dem Körper eines Patienten angebracht zu werden, um charakteristische anatomische Punkte des Patienten zu lokalisieren;
- ein 3D-Scan-Modul (3), das geeignet ist, 3D-Scans (S1) des Körpers des Patienten durchzuführen;
- ein Datenzuordnungs-Modul (4), das ausgebildet ist, um die mit dem 3D-Scan-Modul (3) vorgenommenen 3D-Scans (S1) einer Akupunkturanwendungssequenz (S2) zuzuordnen, die in dem Kartierungsmodul (1) gespeichert ist, basierend auf einer Krankheit des Patienten, um eine bestimmte Akupunkturanwendungssequenz (S3) zu identifizieren, die auf das 3D-Scan (S1) anzuwenden ist;
- einen Projektor (5), der mit dem Datenzuordnungs-Modul (4) verbunden ist und dazu ausgebildet ist, die Akupunkturanwendungssequenz (S3), die auf das 3D-Scan (S1) anzuwenden ist, zu empfangen und dementsprechend einen Abdruck (50) auf dem Körper des Patienten in einer Zeitfolge und in Punktpositionen des zu behandelnden Körpers zu projizieren;
**dadurch gekennzeichnet, dass** das System ferner Folgendes umfasst:
- einen Justierträger (6), der geeignet ist, auf dem Abdruck (50) platziert zu werden, um eine Anwendung einer Nadel (7) oder einer optischen Stimulationsvorrichtung auf dem Abdruck (50) zu justieren;
- ein optisches Erfassungsmodul (8), um zu erfassen, ob der Justierträger (6) korrekt auf dem Abdruck (50) positioniert ist; und
- ein Alarmvorrichtung (9), die mit dem optischen Erfassungsmodul (8) wirkverbunden und dazu ausgebildet ist, den Bediener über eine korrekte Positionierung des Justierträgers (6) auf dem Abdruck (50) zu informieren.

2. System (100) nach Anspruch 1, wobei der Justierträger (6) einen Körper (60) und eine Basis (62) umfasst, die geeignet ist, auf dem von dem Projektor projizierten Abdruck (50) angebracht zu werden, und wobei der Körper (60) und die Basis (62) ein axiales Loch (61) zum Einsetzen einer Nadel (7) oder einer optischen Stimulationsvorrichtung aufweisen.

3. System (100) nach Anspruch 2, wobei der Abdruck (50) dieselbe Umrisskontur wie die Basis (62) des Justierträgers aufweist.

4. System (100) nach Anspruch 3, wobei der Abdruck (50) und die Basis (62) des Justierträgers eine kreisförmige Form mit demselben Durchmesser aufweisen.

5. System (100) nach einem der vorstehenden Ansprüche, wobei das optische Erfassungsmodul (8) eine Kamera umfasst, die geeignet ist, den auf dem Abdruck (50) positionierten Justierträger (6) zu erfassen.

6. System (100) nach einem der vorstehenden Ansprüche, wobei das optische Erfassungsmodul (8) eine Bilderfassungssoftware umfasst, die geeignet ist, ein Bild eines Abschnitts des Abdrucks (50) zu erfassen, das nicht durch den Justierträger (6) abgedeckt ist.

7. System (100) nach einem der vorstehenden Ansprüche, wobei die Alarmvorrichtung (9) vom optischen, akustischen und/oder Vibrationstyp ist.

8. System (100) nach einem der vorstehenden Ansprüche, wobei die Alarmvorrichtung (9) ein vom Bediener getragenes Armband ist.

9. System (100) nach einem der vorstehenden Ansprüche, wobei die Alarmvorrichtung (9) mit dem optischen Erfassungsmodul (8) im drahtlosen Modus verbunden ist.

10. System (100) nach einem der vorstehenden Ansprüche, umfassend eine Datenbank (40) von Nadelanwendungssequenzen, basierend auf einer Krankheit, die auf ein 3D-Bild eines menschlichen Körpers angewendet werden, das von dem 3D-Scan-Modul (3) gescannt wurde, wobei die Datenbank (40) durch Datenzuordnungsmittel (4) erzeugt wird und wobei die Datenbank (4) über einen PC oder ein Mobilgerät zugänglich ist.

## Revendications

1. Système (100) pour acuponcture ou stimulation optique comprenant:
- un module de mappage (1) où sont mémorisées des séquences applicatives d'acuponcture pour des pathologies à traiter :
- des points de repère (2) destinés à être appliqués sur le corps d'un patient pour identifier des points anatomiques caractéristiques du patient ;
- un module de balayage 3D (3) apte à effectuer une numérisation 3D (S1) du corps du patient ;
- un module d'association de données (4) configuré pour associer la numérisation 3D (S1) effectuée par le module de balayage 3D (3) avec une séquence applicative d'acuponcture (S2) mémorisée dans le module de mappage (1), sur la base d'une pathologie du patient, de manière à identifier une séquence applicative d'acuponcture (S3) déterminée appliquée à la numérisation balayage 3D (S1) ;
- un projecteur (5) branché au module d'association de données (4) et configuré pour recevoir séquence applicative d'acuponcture (S3) déterminée appliquée à la numérisation 3D (S1) et conformément projeter une empreinte (50) sur le corps du patient dans une séquence temporelle et sur des positions de points du corps à traiter ;
**caractérisé en ce que** le système comprend également
- un support d'alignement (6) destiné à être disposé sur ladite empreinte (50) pour aligner une application de l'aiguille (7) ou une stimulation optique à ladite empreinte (50) ;
- un module de détection optique (8) apte à détecter si le support d'alignement (6) est correctement positionné sur ladite empreinte (50) ; et
- un module d'alarme (9) opérationnellement branché au dit module de détection optique (8) et configuré pour signaler à l'opérateur le correct positionnement du support d'alignement (6) sur l'empreinte (50).

2. Système (100) selon la revendication 1, où le support d'alignement (6) comprend un corps (60) et une base (62) apte à être appliquée sur l'empreinte (50) projetée par le projecteur et où le corps (60) et la base (62) ont un orifice axial (61) dans lequel une aiguille (7) ou un dispositif de stimulation optique peuvent être insérés.

3. Système (100) selon la revendication 2, où l'empreinte (50) a le même contour de périmètre de la base (62) du support d'alignement.

4. Système (100) selon la revendication 3, où l'empreinte (50) et la base (62) du support d'alignement ont une forme circulaire avec le même diamètre.

5. Système (100) selon l'une quelconque des revendications précédentes, où ledit module de détection optique (8) comprend une caméra apte à filmer le support d'alignement (6) positionné sur l'empreinte (50).

6. Système (100) selon l'une quelconque des revendications précédentes, où ledit module de détection optique (8) comprend un logiciel de détection d'images apte à détecter une image d'une portion de l'empreinte (50) qui n'est pas couverte par le support d'alignement (6).

7. Système (100) selon l'une quelconque des revendications précédentes, où ledit dispositif d'alarme (9) est du type optique, acoustique et/ou à vibration.

8. Système (100) selon l'une quelconque des revendications précédentes, où ledit dispositif d'alarme (9) est un bracelet porté par l'opérateur.

9. Système (100) selon l'une quelconque des revendications précédentes, où ledit dispositif d'alarme (9) est branché au ledit module de détection optique (8) en mode sans fil.

10. Système (100) selon l'une quelconque des revendications précédentes, comprenant une base de données (40) de séquences d'applications d'aiguilles, sur la base d'une pathologie, appliquées à une image 3D d'un corps humain scanné par ledit module de balayage 3D (3), où ladite base de données (40) est créée par lesdits moyens d'association de données (4) et où ladite base de données (4) est accessible moyennant un ordinateur ou des dispositifs intelligents.
